# EUROPEAN PATENT SPECIFICATION

(11) **EP 2 037 205 B1**
(45) Date of publication and mention of the grant of the patent: **25.06.2014**
(21) Application number: 08157511.0
(22) Date of filing: 03.06.2008
(51) Int. Cl.: F41G 3/32

(54) **System and method for determination angular differences on a potentially moving object**
System und Verfahren zur Bestimmung von Winkelabweichungen bei einem potentiell beweglichen Objekt
Système et procédé pour déterminer des différences angulaires sur un objet potentiellement mobile

(30) Priority: 06.06.2007 US 942417 P; 26.10.2007 US 925440
(43) Date of publication of application: 18.03.2009
(73) Proprietor: Honeywell International Inc., Morristown, NJ 07960 (US)
(72) Inventor: Jones, Ralph R., Blane, MN 565449 (US); Carey, David M., Lino Lakes, MN 55014 (US)
(74) Representative: Buckley, Guy Julian

(56) References cited:
- FR-A- 2 618 920
- US-A- 3 955 468
- US-A- 4 495 850
- US-A- 5 619 323
- US-A- 5 672 872
- US-A- 6 020 955
- US-A1- 2005 150 121
- US-B2- 7 120 522

## Description

### BACKGROUND

Boresighting is used to accurately align avionic equipment mounted on a frame of a flight vehicle. Examples of the avionic equipment that require accurate alignment include inertial reference systems, guidance systems, radars, and other sensor and weapon systems. In order to properly operate and control the avionic equipment, it is important to align the equipment on the flight vehicle with respect to a reference axis.

The typical boresight alignment tool such as in US 5 619 323 requires the flight vehicle to be rigidly held motionless (for example, on jacks). For example, when the flight vehicle is not rigidly held in place or where the flight vehicle is located on a moving platform (such as an aircraft carrier), any changes in the boresight alignments cannot be determined accurately. Any available alignment tools require that the flight vehicle being measured remain substantially motionless during the entire period of time the alignment measurements are made.

### SUMMARY

The present invention provides a system as defined in Claim 1.

The system may include the features of any one or more of dependent Claims 2 to 10.

The present invention also provides a method as defined in Claim 11.

The present invention also provides a computer program product as defined in Claim 12.

The following specification discloses a system and method for determining angular differences on a potentially moving object. Particularly, in one embodiment, a boresight alignment system is provided. The system comprises a frame movement sensor operable to determine a reference position on an object, a frame alignment sensor operable to determine a first boresight position on the object, a data acquisition processing unit in communication with the frame movement and frame alignment sensors and a display processing unit in communication with the data acquisition processing unit. The display processing unit is operable to display recent attitude data measured by the frame movement and frame alignment sensors. The data acquisition processing unit comprises program instructions to determine an angular orientation between the reference position and the first boresight position identified by the frame alignment sensor and the frame movement sensor. The data acquisition processing unit uses the angular orientation of the frame movement and the frame alignment sensors to record a first reference and a first movement angle at a first time. Once the frame alignment sensor is relocated to a second boresight position on the object, the program instructions record a second reference and a second movement angle at a second time. The data acquisition processing unit compensates for any frame of reference change made in the reference position measurement based on changes between the first and second reference and movement angle recordings. In addition, the data acquisition processing unit adjusts each set of measurements by using the measurement points obtained at the first and second times where angular motion is at or below a prescribed limit based on a selected measurement accuracy level.

### DRAWINGS

These and other features, aspects, and advantages are better understood with regard to the following description, appended claims, and accompanying drawings where:
FIG. 1 is a block diagram of a boresight alignment system;
FIG. 2 is a block diagram illustrating a method for determining angular differences on a potentially moving object using a boresight alignment tool; and
FIG. 3 is a flow diagram of a method for determining angular differences on a potentially moving object.

The various described features are drawn to emphasize features relevant to the embodiments disclosed. Like reference characters denote like elements throughout the figures and text of the specification.

### DETAILED DESCRIPTION

Embodiments disclosed herein relate to determining angular differences on a potentially moving object in boresight alignment applications. The boresight alignment applications discussed here measure the angular difference in two or more points of the object using a dual portable alignment tool (DPAT). As the DPAT takes a first measurement at a predetermined reference point, a portion of the DPAT is placed at a target location on the object. The DPAT then measures the angular difference from the target location to a second location on the object. Once the DPAT is aligned to the predetermined reference point, angular difference measurements for the object are calculated and can be displayed to an operator in real time. In at least one embodiment, the object to be measured is not completely stationary and is constantly moving in velocity as well as in an angular position relative to earth. In addition, the two or more points do not need to be optically visible with respect to the predetermined reference point. Moreover, the predetermined reference point can be aligned with any discernable frame of reference with respect to the object.

The boresight alignment applications discussed here use angular information from two independently navigating inertial reference units (IRUs) mounted on a flight vehicle. For example, a first IRU is configured to measure the angular difference between two points on an aircraft, with a second IRU configured to measure any angular changes that may take place on the aircraft. In one implementation, the embodiments disclosed here allow for the chassis of the aircraft to be in motion while the alignment procedure is being accomplished. Moreover, the aircraft can be located on a moving platform (for example, an aircraft carrier).

For example, the DPAT records angular information for a frame of reference of an alignment sensor and a movement sensor at a first point in time. Once the alignment sensor is relocated to a second boresight position on the object at a second point in time, the DPAT records the frame of reference angular information of the alignment sensor and movement sensor at the second point in time. The DPAT uses these four sets of data to determine the alignment of the first boresight position to the second boresight position. Moreover, the DPAT disclosed here uses at least one algorithm to selectively measure these two sets of data at a point in time where motion is at or below a prescribed limit based on a selected measurement accuracy level. In one embodiment, the DPAT comprises a first IRU configured as the alignment sensor and a second, independent IRU configured as the movement sensor. The alignment sensor (the first IRU) measures an angle at an origin point, and is moved to a destination point to measure a destination angle. The DPAT subtracts the angular differences between the origin and destination points to determine the result. The movement sensor (the second IRU) is attached to the object and configured to detect any angular movement of the object between recording of the first, the second, and any subsequent measurements. For example, any rotation of the object is detected by the movement sensor and is used during boresight alignments or subsequent boresight realignments to correct the difference measurement for the amount of angular movement that has occurred on the object.

In one implementation, the DPAT uses a single IRU, the alignment sensor, to measure the angular position of both points. In the same (and at least one alternate) implementation, the movement sensor is placed at a reference point midway between the origin and destination points to substantially improve the accuracy of the alignment measurement. For example, in a typical boresight alignment application, the object to be measured will bend when different pressures are applied, and placing the movement sensor at the midway reference point substantially eliminates the angular error from the measurement. Any mechanical alignment errors inherent in an mounting position (for example, an IRU docking station) are substantially reduced since the movement sensor exhibits the same angular position at the reference point as the alignment sensor exhibits at the origin and destination points.

Although reference is made to boresight alignment applications involving aircraft, the DPAT boresighting tool disclosed here will be useful in oil drilling, civil engineering, construction, precision machining equipment, and medical applications (among others), which involve the alignment of any surface with respect to a structural or virtual reference line

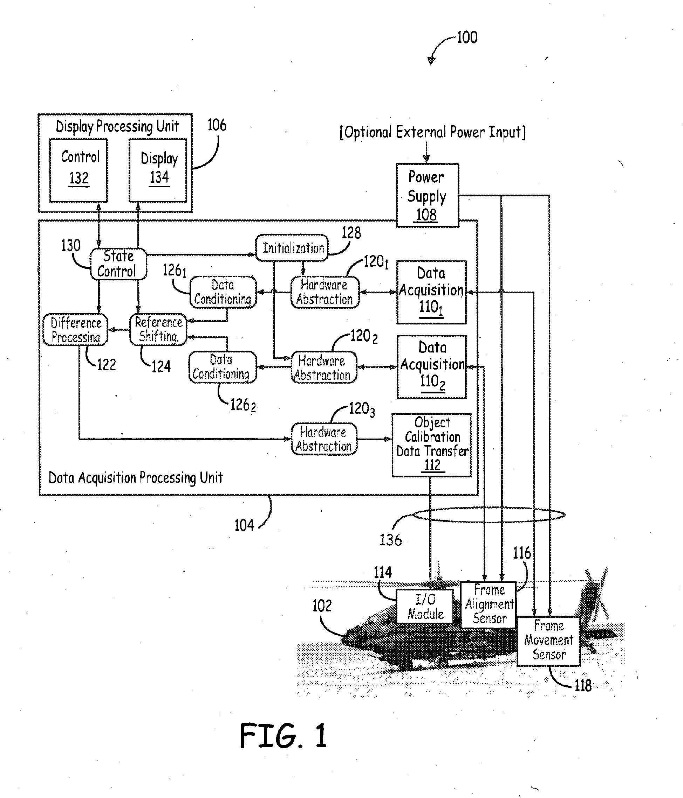

FIG. 1 is a boresight alignment system 100 for determining angular differences on a potentially moving object 102. In the example embodiment of FIG. 1, the object 102 is shown as a helicopter. The system 100 further comprises a frame alignment sensor 116 for determining a reference position of the object 102, a frame movement sensor 118 for attitude measurements of the object 102, and a data acquisition processing unit 104 in communication with the frame alignment sensor 116 and the frame movement sensor 118. In the example embodiment of FIG. 1, the data acquisition processing unit 104 comprises a data bus 136 to the frame alignment sensor 116 and the frame movement sensor 118. As discussed in further detail below, the data acquisition processing unit 104 records and analyzes the information obtained from the frame alignment sensor 116 and the frame movement sensor 118.

In one implementation, the frame alignment sensor 116 and the frame movement sensor 118 each comprise an inertial reference unit (IRU). Moreover, the IRUs considered here comprise full navigation-grade strap down IRUs with the highest permissible commercial-grade gyroscopes. In one implementation, substantially improved performance can be obtained by installing military-grade gyroscopes, or by adding a GPS receiver system to each of the frame alignment sensor 116 and the frame movement sensor 118 for substantially greater long term drift stability and accuracy. In alternate implementations, the frame alignment sensor 116 and the frame movement sensor 118 comprise an RF angle positioning device, and the like, operable to record angular measurements with respect to a fixed reference frame. For example, the system 100 can also be implemented with a compass and spirit level to measure pitch, roll, and heading with respect to an Earth reference.

In the example embodiment of FIG. 1, the system 100 further comprises a display processing unit 106 in communication with the data acquisition processing unit 104, and a power supply 108 operable to supply power to the data acquisition processing unit 104, the frame alignment sensor 116, and the frame movement sensor 118 as shown in FIG. 1. In one implementation, the power supply 108 is an integrated battery and battery charger system for remote sites with limited electrical utility power. In alternate embodiments, the data acquisition processing unit 104 forms a portion of an integrated avionics measurement system for the object 102 powered by a main supply (not shown).

The display processing unit 106 is operable to display a last known set of attitude data measured by the frame alignment sensor 116 and the frame movement sensor 118. In one implementation, the display processing unit 106 includes a control module 132 and a display module 134 for displaying near real time near real time attitude data measured by the frame alignment sensor 116 and the frame movement sensor 118. Moreover, the display processing unit 106 uses one of a data link connection, a serial data bus connection, an Ethernet cable connection, or a wireless LAN connection for the display module 134 to display the alignment results determined by the data acquisition processing unit 104. The control module 132 and the display module 134 are communicatively coupled to the data acquisition processing unit 106 through a state control module 130. The state control module 130 invokes any required actions from the display processing unit 106 for display options of the measurement processing performed by the data acquisition processing unit 104.

The data acquisition processing unit 104 further includes data acquisition modules 110₁ and 110₂ and data conditioning modules 126₁ and 126₂. In the example embodiment of FIG. 1, the data acquisition modules 110₁ and 110₂ are communicatively coupled to the frame movement sensor 118 and the frame alignment sensor 116, respectively. As further described below, the data acquisition modules 110 are operable to correlate the near real time attitude data received from the frame movement sensor 118 and the frame alignment sensor 116. The data conditioning modules 126₁ and 126₂ are communicatively coupled with the data acquisition modules 110₁ and 110₂ through the hardware abstraction layers 120₁ and 120₂. The data conditioning modules 126 are operable to filter the near real time attitude data to substantially eliminate undesired high frequency noise and differences in transport delays. The hardware abstraction layers 120₁ and 120₂ are operable to manage the correlated attitude data from the data acquisition modules 110₁ and 110₂, respectively. For example, the hardware abstraction layers 120 are operable to interpret data from various types of IRU configurations. In one implementation, an initialization module 128 for the hardware abstraction layers 120 is responsive to the state control module 130.

In operation, the data acquisition processing unit 104 determines an angular orientation of a reference position on the object 102 with the frame alignment sensor 116. In one implementation, the reference position is located at any point on the object 102. The data acquisition processing unit 104 determines an angular orientation of a first boresight position on the object 102 identified by the frame movement sensor 118. In one implementation, both the frame movement sensor 118 and the frame alignment sensor 116 determine angular orientation with respect to an Earth frame of reference within the IRU of each of the sensors 116 and 118.

The data acquisition processing unit 104 uses the angular orientation of the frame movement sensor 118 and the frame alignment sensor 116 to record a first reference angle at a first point in time. Once the frame alignment sensor 116 is relocated to a second boresight position on the object 102, the data acquisition processing unit 104 records a second reference angle at a second point in time. For each point in time a measurement is made, the data acquisition processing unit 104 is operable to interrogate a contiguous series of data from the sensors 116 and 118 over a user definable period of time. The data acquisition processing unit 104 further analyzes the contiguous data series to determine when the motion in all three axes is experiencing the least amount of movement. The data acquisition processing unit 104 averages a segment of data experiencing the least amount of movement to derive the most accurate angular measurement in the difference processing module 122. Furthermore, the data segment is statistically analyzed to determine if the measurement made was within a user-defined excessive movement limit. In one embodiment, the user-defined excessive movement limit is based on a prescribed measurement accuracy level.

The data acquisition processing unit 104 uses a difference processing module 122 to adjust for the angular motion of the reference position measured by the frame movement sensor 118. The difference processing module 122 receives an angular reference orientation and offset correction for the boresight alignments measured from an angular reference point shifting module 124 communicatively coupled to the data conditioning modules 126₁ and 126₂. In one implementation, the angular reference point shifting module 124 corrects for timing differences of transmitted data from the frame alignment sensor 116 and the frame movement sensor 118 by interpolating the periodic data of the frame alignment sensor 116 to the same time point of the frame movement sensor 118. In the example embodiment of FIG. 1, the difference processing module 122 is applied to the corrected data stream for data alignment and (optional) automatic measurement point selections based on the lowest motion occurring on all three axes of motion for each point in time a measurement is made. For example, the difference processing module 122 scans the corrected alignment data for a set period of time to determine the quietest set of contiguous time (that is, a time period with the least angular movement) based on a set of acceptable motion parameters. In one implementation, the scanning time is programmable (for example, at least ten seconds). The data collected for the duration of the scanning time is averaged by the difference processing module 122, and the data acquisition processing unit 104 records any angular differences from each of the sensors 116 and 118. In one embodiment, once both measurement points on the object 102 are recorded, the data acquisition processing unit 104 uses matrix math functions to calculate the angular difference between the first, the second, and any subsequent measurement points oriented with respect to the reference position. For example, changes in the angular measurement can be measured to about 1/1000 of a degree.

In the example embodiment of FIG. 1, the data acquisition processing unit 104 further comprises an object calibration data transfer module 112 in operative communication with the difference processing module 122 and a hardware abstraction layer 120₃ through the data bus 136. The object calibration data transfer module 112 provides the object 102 with the corrected angular position values through an input/output (I/O) module 114. Moreover, the object calibration data transfer module 112 can use one of, without limitation, a data link connection, a serial bus connection, an Ethernet cable connection, or a wireless LAN connection as a data interface to the I/O module 114.

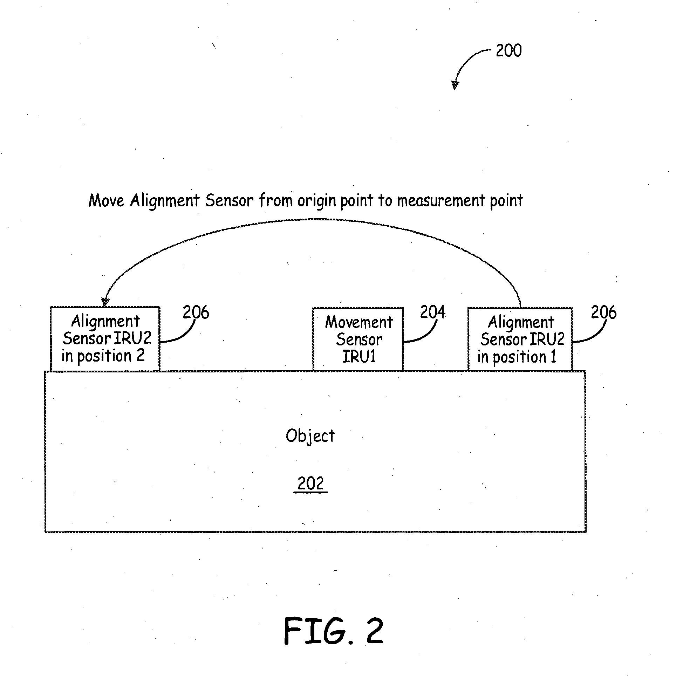

FIG. 2 is a block diagram illustrating a method 200 of determining angular differences on a potentially moving object using a boresight alignment tool, similar to the system 100 of FIG. 1. The two inertial reference units (IRU) shown in FIG. 2, IRU1 and IRU2, comprise a movement sensor 204 and an alignment sensor 206. In the example embodiment of FIG. 2, the movement sensor 204 represents the frame movement sensor 118, and the alignment sensor 206 represents the frame alignment sensor 116 of FIG. 1, respectively. Moreover, the alignment sensor 206 is oriented with respect to a first surface position of the object 202, referred to here as an origin point. As the alignment sensor 206 moves from the origin point (position 1) to a destination point (position 2) as shown in FIG. 2, IRU1 and IRU2 transmit angular and other relevant measurements that time correlates the data received from both IRU1 and IRU2. For example, the angular measurements of IRU1 and IRU2 can be transmitted with a data bus to a device similar to the data acquisition processing unit 104 of FIG. 1.

The method of FIG. 2 uses the time correlated attitude measurement data to determine when the object 202 is moving the least to obtain an angular measurement of the origin point and a relative position of the object 202 at the time of the first measurement. In one implementation, matrix mathematical functions are used to adjust the frame of reference from the alignment sensor 206 in position 1 to the position of the movement sensor 204. A statistical assessment of the angular movement at position 1 is made and if the amount of movement exceeds a threshold level, additional alignment measurements are made until the amount of movement is acceptable to meet accuracy needs of the object 202. For example, when the alignment sensor 206 is moved to the destination point at position 2, the same measurement process is repeated, allowing the alignment sensor 206 to record both the angle of the reference point as well as any change in angular orientation that has occurred in the object 202 due to boresight realignment or external environmental conditions based on the reference position of the movement sensor 204. The difference between the two points and the angular movement of the object 202 is used to determine the true angular difference when the angular movement does not exceed a prescribed measurement accuracy level. Moreover, the method of FIG. 2 substantially eliminates the effects of potential object movement during boresight alignments.

In one implementation, the movement sensor 204 is placed at a midway point where the object 202 bends and flexes approximately one half of the total flexure between the positions 1 and 2. The midway point substantially reflects one half of the object 202 warping or twisting or any other form of attitudinal distortion that may occur to the structure of the object 202 when the measurement occurs. The placement of the movement sensor 204 at the midway measurement point discussed here substantially reduces attitude measurement errors between the positions 1 and 2 due to any external environmental conditions (for example, any bending, twisting or warping of the object 202 due to changes in temperature, airspeed, and the like).

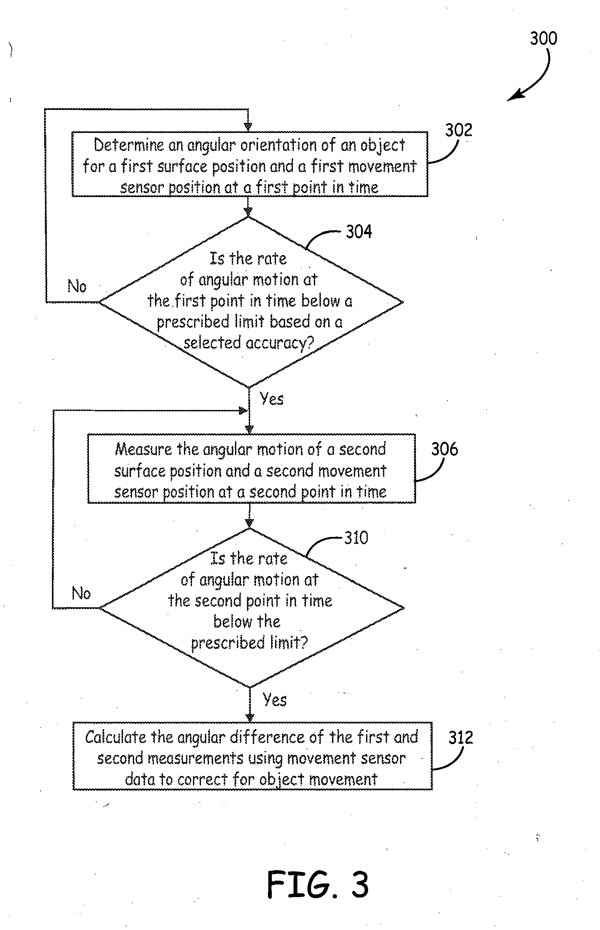

FIG. 3 is a flow diagram of a method 300 for determining angular differences on an object. In the example embodiment of FIG. 3, the method 300 addresses using an alignment tool (for example, the boresight alignment system of FIG. 1) to determine the angular differences on the object in motion. The alignment tool determines an angular orientation for a first surface position of the object based on a reference position and a movement sensor position (block 302) from a first continuous stream of data. The alignment tool evaluates the continuous data stream about a first point in time to determine if acceptable levels of motion occurred at the first time (block 304). For example, if the motion exceeds a prescribed limit based on a selected accuracy, the measurements repeat at block 302 until environmental conditions of the object meet the prescribed limit at the first time. The alignment tool measures a second reference angle and a second movement sensor angle for a second surface position of the object, oriented with respect to the first surface position, at a second time (block 306). The alignment tool then evaluates a second continuous data stream about the second point in time to determine if acceptable levels of motion occurred at the second time (block 310). If the motion exceeds the prescribed limit based on the selected accuracy, the measurements repeat at block 306 until the environmental conditions of the object meet the prescribed limit at the second time. Once the evaluated angular motion is below the prescribed accuracy limit, the alignment tool calculates the difference from first and second measurement times, taking into account any angular shift in the movement sensor reference plane to correct for angular motion of the object (block 312).

At least one embodiment disclosed herein can be implemented by computer-executable instructions, such as program product modules, which are executed by the programmable processor. Generally, the program product modules include routines, programs, objects, data components, data structures, and algorithms that perform particular tasks or implement particular abstract data types. The computer-executable instructions, the associated data structures, and the program product modules represent examples of executing the embodiments disclosed.

This description has been presented for purposes of illustration, and is not intended to be exhaustive or limited to the embodiments disclosed. Variations and modifications may occur, which fall within the scope of the following claims.

## Claims

1. A boresight alignment system (100), comprising:
a frame movement sensor (118) attached to an object (102) at a reference position;
a frame alignment sensor (116) attached to the object at a first boresight position located away from the reference position;
a data acquisition processing unit (104) in communication with the frame movement and frame alignment sensors, the data acquisition processing unit operable to determine an angular orientation of the object with respect to an Earth frame of reference within said sensors for the reference position and the first boresight position, the angular orientation of the first boresight position used to measure a first reference angle at a first time, wherein a second reference angle is measured at a second time after the frame alignment sensor is attached to the object at a second boresight position located away from the reference position and the first boresight position;
a display processing unit (106) in communication with the data acquisition processing unit, the display processing unit operable to display near real time attitude data measured by the frame movement and frame alignment sensors, and said data acquisition processing unit (104) adapted to calculate corrected angular orientation values from a difference between said first and second reference angles.

2. The system of claim 1, wherein the frame movement sensor and the frame alignment sensor each comprise a measuring device operable to record angular measurements with respect to a fixed reference frame.

3. The system of claim 1, wherein each of the frame movement and frame alignment sensors comprise an inertial reference unit.

4. The system of claim 1, wherein the reference position of the frame movement sensor is located at any point on the object.

5. The system of claim 1, wherein the frame movement sensor is placed at a point where object bending occurs substantially equal from the first and second boresight positions on the object.

6. The system of claim 1, wherein the data acquisition processing unit further comprises program instructions adapted to evaluated a potential angular motion with respect to a predetermined frame of reference when the object does not remain in a substantially fixed position between the first and second times.

7. The system of claim 1, wherein the data acquisition processing unit further comprises a difference processing module, the difference processing module operable to:
receive an angular reference and movement sensor orientation from an angular reference point shifting module (124); and
scan adjusted attitude data for a first time period with a least angular motion over a programmable scanning time.

8. The system of claim 1, wherein the data acquisition processing unit further comprises:
at least one data acquisition module (110) operable to correlate the near real time attitude data received from the frame movement and frame alignment sensors;
at least one data conditioning module (126) in communication with the at least one data acquisition module, the at least one data conditioning module operable to filter the real time attitude data to substantially eliminate undesired high frequency noise; and
at least one hardware abstraction layer (120) operable to manage the correlated attitude data from the at least one data acquisition module.

9. The system of claim 1, wherein the data acquisition processing unit further comprises an object calibration data transfer module (112) operable to provide the object with the corrected angular orientation values.

10. The system of claim 1, wherein the display processing unit comprises a control module (132) and a display module (134).

11. A method for determining angular orientation differences on an object (102), comprising:
determining an angular orientation of an object for a reference position of a frame movement sensor (118) on the object and a first boresight position of a frame alignment sensor (116) located on the object (102), the first boresight position located away from the reference position;
using the angular orientation of the first boresight position to measure a first reference angle with respect to an Earth frame of reference within said sensors at a first time;
measuring a second reference angle at a second time after the alignment sensor is relocated to a second boresight position on the object away from the reference position;
comparing the first and second reference angles to evaluate potential angular motion of the object between the first and second times with respect to the reference position; and
calculating angular orientation differences between the first reference angle and one or more subsequent angle measurements based on at least the first and second reference angles, wherein a frame of reference of the one or more subsequent angle measurements is adjusted by a difference in the movement sensor angular orientation change between the first time and the second time.

12. A computer program product comprising a computer-readable medium having executable instructions for performing a method according to claim 11.

## Patentansprüche

1. Mittelachsen-Ausrichtungssystem (100), das Folgendes umfasst:
einen Rahmenbewegungssensor (118), der an einem Objekt (102) bei einer Bezugsposition befestigt ist;
einen Rahmenausrichtungssensor (116), der an dem Objekt an einer ersten Mittelachsenposition befestigt ist, die sich entfernt von der Bezugsposition befindet;
eine Datenerfassungsverarbeitungseinheit (104) in Verbindung mit dem Rahmenbewegungs- und Rahmenausrichtungssensor, wobei die Datenerfassungsverarbeitungseinheit betrieben werden kann, um eine Winkelorientierung des Objekts in Bezug auf einen Erd-Bezugsrahmen in den Sensoren für die Bezugsposition und die erste Mittelachsenposition zu bestimmen, wobei die Winkelorientierung der ersten Mittelachsenposition verwendet wird, um einen ersten Bezugswinkel zu einem ersten Zeitpunkt zu messen, wobei ein zweiter Bezugswinkel zu einem zweiten Zeitpunkt gemessen wird, nachdem der Rahmenausrichtungssensor an dem Objekt an einer zweiten Mittelachsenposition befestigt wurde, die sich fern von der Bezugsposition und der ersten Mittelachsenposition befindet;
eine Anzeigeverarbeitungseinheit (106) in Verbindung mit der Datenerfassungsverarbeitungseinheit, wobei die Anzeigeverarbeitungseinheit betrieben werden kann, um Quasi-Echtzeit-Fluglagedaten anzuzeigen, die von dem Rahmenbewegungs- und dem Rahmenausrichtungssensor gemessen wurden;
und wobei die Datenerfassungsverarbeitungseinheit (104) ausgelegt ist, korrigierte Winkelorientierungswerte aus einem Unterschied zwischen dem ersten und dem zweiten Bezugswinkel zu berechnen.

2. System nach Anspruch 1, wobei der Rahmenbewegungssensor und der Rahmenausrichtungssensor jeweils eine Messvorrichtung umfassen, die betrieben werden kann, um Winkelmessungen in Bezug auf einen festen Bezugsrahmen aufzuzeichnen.

3. System nach Anspruch 1, wobei der Rahmenbewegungssensor und der Rahmenausrichtungssensor eine Trägheitsbezugseinheit umfassen.

4. System nach Anspruch 1, wobei sich die Bezugsposition des Rahmenbewegungssensors an einem beliebigen Punkt an dem Objekt befindet.

5. System nach Anspruch 1, wobei der Rahmenbewegungssensor an einem Punkt angeordnet ist, an dem eine Objekt-Verbiegung im Wesentlichen im gleichen Ausmaß von der ersten und der zweiten Mittelachsenposition an dem Objekt erfolgt.

6. System nach Anspruch 1, wobei die Datenerfassungsverarbeitungseinheit ferner Programmanweisungen umfasst, die ausgelegt sind, um eine mögliche Winkelbewegung in Bezug auf einen vorbestimmten Bezugsrahmen abzuschätzen, wenn das Objekt zwischen dem ersten und dem zweiten Zeitpunkt nicht in einer im Wesentlichen festen Position bleibt.

7. System nach Anspruch 1, wobei die Datenerfassungsverarbeitungseinheit ferner ein Differenzverarbeitungsmodul umfasst, wobei das Differenzverarbeitungsmodul betrieben werden kann, um:
einen Winkelbezug und eine Bewegungssensor-Ausrichtung von einem Winkelbezugspunkt-Verschiebungsmodul (124) zu empfangen; und
eingestellte Fluglagedaten für eine erste Zeitdauer mit einer kleinsten Winkelbewegung über eine programmierbare Abtastzeitdauer abzutasten.

8. System nach Anspruch 1, wobei die Datenerfassungsverarbeitungseinheit ferner Folgendes umfasst:
zumindest ein Datenerfassungsmodul (110), das betrieben werden kann, um die von dem Rahmenbewegungs- und dem Rahmenausrichtungssensor empfangenen Quasi-Echtzeit-Fluglagedaten zu korrelieren;
zumindest ein Datenaufarbeitungsmodul (126) in Verbindung mit dem zumindest einen Datenerfassungsmodul, wobei das zumindest eine Datenaufarbeitungsmodul betrieben werden kann, um die Echtzeit-Fluglagedaten zu filtern, um unerwünschtes Hochfrequenzrauschen im Wesentlichen zu beseitigen; und
zumindest eine Hardware-Abstraktionsschicht (120), die betrieben werden kann, um die korrelierten Fluglagedaten von dem zumindest einen Datenerfassungsmodul zu verwalten.

9. System nach Anspruch 1, wobei die Datenerfassungsverarbeitungseinheit ferner ein Objektkalibrierungs-Datenübertragungsmodul (112) umfasst, das betrieben werden kann, um das Objekt mit den korrigierten Winkelorientierungswerten zu versehen.

10. System nach Anspruch 1, wobei die Anzeigeverarbeitungseinheit ein Steuerungsmodul (132) und ein Anzeigemodul (134) umfasst.

11. Verfahren zur Bestimmung von Winkelorientierungsunterschieden eines Objekts (102), das folgende Schritte umfasst:
Bestimmen einer Winkelorientierung eines Objekts für eine Bezugsposition eines Rahmenbewegungssensors (118) an dem Objekt und einer ersten Mittelachsenposition eines Rahmenausrichtungssensors (116), der sich an dem Objekt (102) befindet, wobei sich die erste Mittelachsenposition fern von der Bezugsposition befindet;
Verwenden der Winkelorientierung der ersten Mittelachsenposition, um einen ersten Bezugswinkel in Bezug auf einen Erd-Bezugsrahmen in den Sensoren zu einem ersten Zeitpunkt zu messen;
Messen eines zweiten Bezugswinkels zu einem zweiten Zeitpunkt, nachdem der Ausrichtungssensor zu einer zweiten Mittelachsenposition an dem Objekt fern von der Bezugsposition verlagert wurde;
Vergleichen des ersten und des zweiten Bezugswinkels, um eine mögliche Winkelbewegung des Objekts zwischen dem ersten und dem zweiten Zeitpunkt in Bezug auf die Bezugsposition abzuschätzen; und
Berechnen von Winkelorientierungsunterschieden zwischen dem ersten Bezugswinkel und einem oder mehreren nachfolgenden Winkelmessungen auf Basis von zumindest dem ersten und dem zweiten Bezugswinkel, wobei ein Bezugsrahmen der einen oder mehreren nachfolgenden Winkelmessungen durch einen Unterschied in der Winkelorientierungsänderung des Bewegungssensors zwischen dem ersten und dem zweiten Zeitpunkt eingestellt wird.

12. Computerprogramm-Produkt, das ein computerlesbares Medium mit ausführbaren Anweisungen zur Durchführung eines Verfahrens nach Anspruch 11 umfasst.

## Revendications

1. Système d'alignement de ligne de visée (100), comprenant :
un capteur de mouvement de référentiel (118) fixé à un objet (102) à une position de référence ;
un capteur d'alignement de référentiel (116) fixé à l'objet à une première position de ligne de visée éloignée de la position de référence ;
une unité de traitement d'acquisition de données (104) en communication avec les capteurs de mouvement de référentiel et d'alignement de référentiel, l'unité de traitement d'acquisition de données ayant pour fonction de déterminer une orientation angulaire de l'objet par rapport à un référentiel terrestre au sein desdits capteurs pour la position de référence et la première position de ligne de visée, l'orientation angulaire de la première position de ligne de visée étant utilisée pour mesurer le premier angle de référence à un premier instant, dans lequel un second angle de référence est mesuré à un second instant après que le premier capteur d'alignement de référentiel a été fixé à l'objet à une seconde position de ligne de visée éloignée de la position de référence et de la première position de ligne de visée ;
une unité de traitement d'affichage (106) en communication avec l'unité de traitement d'acquisition de données, l'unité de traitement d'affichage ayant pour fonction d'afficher des données d'attitude en quasi-temps réel mesurées par les capteurs de mouvement de référentiel et d'alignement de référentiel ;
et ladite unité de traitement d'acquisition de données (104) étant apte à calculer des valeurs d'orientation angulaire corrigées à partir d'une différence entre lesdits premier et second angles de référence.

2. Système selon la revendication 1, dans lequel le capteur de mouvement de référentiel et le capteur d'alignement de référentiel comprennent chacun un dispositif de mesure ayant pour fonction d'enregistrer des mesures angulaires par rapport à un référentiel fixe.

3. Système selon la revendication 1, dans lequel chacun des capteurs de mouvement de référentiel et d'alignement de référentiel comprend une unité de référence inertielle.

4. Système selon la revendication 1, dans lequel la position de référence du capteur de mouvement de référentiel est située sur un point quelconque de l'objet.

5. Système selon la revendication 1, dans lequel le capteur de mouvement de référentiel est placé en un point où il se produit une courbure de l'objet sensiblement égale à partir des première et seconde positions de ligne de visée sur l'objet.

6. Système selon la revendication 1, dans lequel l'unité de traitement d'acquisition de données comprend en outre des instructions de programme aptes à évaluer un mouvement angulaire potentiel par rapport à un référentiel prédéterminé lorsque l'objet ne reste pas en position sensiblement fixe entre les premier et second instants.

7. Système selon la revendication 1, dans lequel l'unité de traitement d'acquisition de données comprend en outre un module de traitement de différence, le module de traitement de différence ayant pour fonction de :
recevoir une référence angulaire et une orientation de capteur de mouvement en provenance d'un module de décalage de point de référence angulaire (124) ; et
explorer des données d'attitude ajustées pendant une première période de temps avec un moindre mouvement angulaire au cours d'un temps d'exploration programmable.

8. Système selon la revendication 1, dans lequel l'unité de traitement d'acquisition de données comprend en outre :
au moins un module d'acquisition de données (110) ayant pour fonction de corréler les données d'attitude en quasi-temps réel reçues en provenance des capteurs de mouvement de référentiel et d'alignement de référentiel ;
au moins un module de conditionnement de données (126) en communication avec l'au moins un module d'acquisition de données, l' au moins un module de conditionnement de données ayant pour fonction de filtrer les données d'attitude en temps réel afin d'éliminer sensiblement un bruit à haute fréquence indésirable ; et
au moins une couche d'abstraction matérielle (120) ayant pour fonction de gérer les données d'attitude corrélées provenant de l'au moins un module d'acquisition de données.

9. Système selon la revendication 1, dans lequel l'unité de traitement d'acquisition de données comprend en outre un module de transfert de données d'étalonnage d'objets (112) ayant pour fonction de conférer à l'objet les valeurs d'orientation angulaire corrigées.

10. Système selon la revendication 1, dans lequel l'unité de traitement d'affichage comprend un module de commande (132) et un module d'affichage (134).

11. Procédé de détermination de différences d'orientation angulaire sur un objet (102), comprenant :
la détermination d'une orientation angulaire d'un objet pour une position de référence d'un capteur de mouvement de référentiel (118) sur l'objet et une première position de ligne de visée d'un capteur d'alignement de référentiel (116) situé sur l'objet (102), la première position de ligne de visée étant éloignée de la position de référence ;
l'utilisation de l'orientation angulaire de la première position de ligne de visée afin de mesurer un premier angle de référence par rapport à un référentiel terrestre au sein desdits capteurs à un premier instant ;
la mesure d'un second angle de référence à un second instant après que le capteur d'alignement a été déplacé à une seconde position de ligne de visée sur l'objet,
éloignée de la position de référence ;
la comparaison des premier et second angles de référence pour évaluer un mouvement angulaire potentiel de l'objet entre les premier et second instants par rapport à la position de référence ; et
le calcul de différences d'orientation angulaire entre le premier angle de référence et une ou plusieurs mesures angulaires suivantes sur la base d'au moins les premier et second angles de référence, dans lequel un référentiel des une ou plusieurs mesures angulaires suivantes est ajusté par une différence de variation d'orientation angulaire des capteurs de mouvement entre le premier instant et le second instant.

12. Produit de programme informatique comprenant un support lisible par ordinateur ayant des instructions exécutables pour mettre en oeuvre un procédé selon la revendication 11.
